(19) Europäisches Patentamt / European Patent Office / Office européen des brevets

(11) **EP 3 591 981 A2**

(12) **EUROPÄISCHE PATENTANMELDUNG**

(43) Veröffentlichungstag:
08.01.2020 Patentblatt 2020/02

(21) Anmeldenummer: 19156652.0

(22) Anmeldetag: 12.02.2019

(51) Int Cl.:
*H04N 21/242* (2011.01)  *H04N 21/43* (2011.01)
*H04N 21/431* (2011.01)  *H04N 21/44* (2011.01)
*H04N 21/81* (2011.01)  *H04N 21/462* (2011.01)
*H04N 21/858* (2011.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.07.2018 DE 102018116038**

(71) Anmelder: **ProSiebenSat.1 Digital GmbH**
**85774 Unterföhring (DE)**

(72) Erfinder: **MYSLIVIEC, Kai**
**81371 München (DE)**

(74) Vertreter: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **VERFAHREN ZUR ÜBERBLENDUNG WENIGSTENS EINER BILDSEQUENZ EINES LINEAREN TV-SIGNALS**

(57) Die vorliegende Anmeldung betrifft ein Verfahren zur Überblendung wenigstens einer linearen Bildsequenz eines linearen TV-Signals mit wenigstens einer Online-Bildsequenz, wobei ein Empfangsgerät das lineare TV-Signal empfängt und auf einem Bildschirm ausgibt, eine auf dem Empfangsgerät ausgeführte Hbb-TV-Applikation, die Online- Bildsequenzen von einem Internetserver empfängt und wenigstens eine lineare Bildsequenz des TV-Signals überblendet, indem anstatt der linearen Bildsequenz die Online-Bildsequenz am Bildschirm ausgegeben wird, und wobei die HbbTV-Applikation während des notwendigen Pufferprozesses vor dem Abspielen der Online-Bildsequenz eine Online-Tafel während der Pufferzeit am Bildschirm erzeugt.

EP 3 591 981 A2

**Beschreibung**

Die Erfindung betrifft ein Verfahren zur Überblendung wenigstens einer Bildsequenz eines linearen TV-Signals durch wenigstens eine alternative Bildsequenz.

Lineares Fernsehen wird als Broadcasting-Signal an die Empfangsgeräte der Endkunden übertragen, wodurch jeder einzelne Fernsehzuschauer dieselben Bildinhalte auf dem gewählten Kanal empfängt. Die Finanzierung des Fernsehangebots basiert Großteils auf Werbeeinnahmen, die durch das Ausstrahlen von Werbespots bzw. ganzen Werbeblöcken während Werbepausen des Fernsehprogramms generiert werden. Aufgrund der linearen Natur des Fernsehsignals werden alle Fernsehzuschauscher des Kanals mit denselben Werbeinhalten bedient, die üblicherweise in Abhängigkeit der mit dem Fernsehprogramm angesprochenen Zielgruppe ausgewählt werden.

Gegenüber dem linearen Fernsehprogramm ist man bei der Verbreitung von Videoinhalten über Onlineplattformen fortschrittlicher. Die dort verbreiteten medialen Inhalte werden mit Werbespots versehen, die speziell auf den einzelnen Zuschauer bzw. Internetnutzer individuell abgestimmt werden können. Zum Einsatz kommen sogenannte Werbemittelserver (im Fachjargon Ad-Server), die persönliche Informationen des jeweiligen Betrachters auswerten und darauf basierend individuell zugeschnittene Werbespots auswählen und an das Empfangsgerät ausspielen. Ergänzend stehen umfangreiche Möglichkeiten zur Reichweitenauswertung der Werbemittel zur Verfügung. Dies optimiert die werbungsbasierte Einnahmequellen der Anbieter von Videoinhalten.

In der Vergangenheit wurden nun bereits Versuche unternommen, die Vorteile der vorgenannten Online-Werbung auf das lineare Fernsehen zu übertragen. Möglich wurde dies durch die Einführung des neuen HbbTV 2.0 Standards, der entsprechende Optionen und Möglichkeiten bereithält. Ältere Versionen des HbbTV-Standards unterstützen diese Optionen jedoch noch nicht. Da allerdings ein Großteil der im Markt eingesetzten TV-Empfangsgeräte auf ältere Versionen des HbbTV Standards zurückgreift, ist die Reichweite dieses neuen Ansatzes bislang sehr begrenzt.

Die Aufgabe der vorliegenden Erfindung besteht daher darin, die zuvor genannte Idee dahingehend weiter zu entwickeln, um die Vorteile der Online-Werbung auch für solche Empfangsgeräte ausnutzen zu können, die nur ältere Versionen des HbbTV-Standards unterstützen.

Gelöst wird diese Aufgabe durch ein Verfahren gemäß den Merkmalen des Anspruchs 1. Vorteilhafte Ausgestaltungen des Verfahrens sind Gegenstand der abhängigen Ansprüche.

Ziel des Verfahrens ist es, wenigstens eine lineare Bildsequenz innerhalb eines linearen TV-Signals, welches üblicherweise per Broadcast-Signal von einem Sendezentrum übertragen wird, durch wenigstens eine alternative Online-Bildsequenz zu ersetzen bzw. zu überblenden. Der Begriff "Online" soll in diesem Zusammenhang verdeutlichen, dass die Online-Bildsequenz über einen anderen Übertragungsweg als das lineare TV-Signal bezogen wird, bspw. über eine Internetverbindung der Applikation. Mit anderen Worten soll auf einem Bildschirm, der entweder Bestandteil des Empfangsgerätes ist oder mit diesem in Verbindung steht, nicht die ursprüngliche, im linearen TV-Signal enthaltene Bildsequenz wiedergegeben werden, sondern stattdessen eine alternative Bildsequenz dargestellt werden. In einer konkreten Anwendung sollen mittels des Verfahrens ein oder mehrerer Werbespots des linearen Fernsehprogramms durch alternative Online-Werbespots ersetzt werden, diese idealerweise genau auf den individuellen Zuschauer bzw. Nutzer des Empfangsgeräts zugeschnitten sind.

Ermöglicht wird dies durch eine auf dem Empfangsgerät ausgeführte HbbTV-Applikation. Schaltet der Zuschauer das Empfangsgerät auf den entsprechenden Sender, so wird eine in der sog. Applikation Information Table (kurz: AIT) enthaltene Internet-URL geladen und am Empfangsgerät die mittels URL adressierte HTML-Seite zur Anzeige gebracht. Eine auf dieser Seite ausgeführte JavaScript-Applikation dient zum Abspielen von Bildsequenzen.

Dadurch lassen sich auf dieser HTML-Seite Videos wie in einem Webbrowser abspielen, bspw. in Form des linearen TV-Signals oder aber in Form einer alternativen Online-Bildsequenz. Durch Änderung der Bezugsquelle des in der HTML-Seite angezeigten Videos, d.h. entweder das lineare TV-Signal oder aber die Online-Bildsequenz, kann für den Zuschauer unbemerkt der angezeigte Bildinhalt manipuliert werden. Allgemein gesagt kann statt der Wiedergabe des linearen Fernsehsignals die von einer alternativen Quelle abgerufene alternative Bildsequenz auf dem Bildschirm temporär ausgegeben werden.

Ein Problem der HbbTV Standardversion 1.5 oder älter besteht darin, dass diese lediglich die Anzeige eines einzigen Videoinhaltes innerhalb der HTML-Seite gestatten und der verwendete Videoplayer zudem kein Vorpuffern der abzuspielenden Bildsequenzen, d.h. bereits während der Ausgabe eines anderen Videobildes ermöglicht. Demzufolge würde auf dem Bildschirm nach dem Ändern der Bezugsquelle zur Anzeige der alternativen Online-Bildsequenz zunächst für die Dauer des Pufferprozesses kein Bild angezeigt werden. Um diese Anzeigelücke für den Zuschauer möglichst unbemerkt zu schliessen, erzeugt die HbbTV-Applikation erfindungsgemäß für die Dauer des Pufferprozess eine graphische Darstellung, auch als erste Online-Tafel bezeichnet, die bis zum tatsächlichen Abspielbeginn der alternativen Online-Bildsequenz auf dem Bildschirm angezeigt wird.

Die graphische Darstellung bzw. Tafel kann eine statische oder dynamische bildliche Darstellung sein. Idealerweise wird diese derart gewählt, dass der Zuschauer vom Umschaltprozess möglichst wenig mitbekommt.

Gemäß einer bevorzugten Ausführungsform kann innerhalb des linearen TV Signals vor und/oder nach der zu ersetzenden linearen Bildsequenz eine lineare Tafel eingefügt werden. Mit dem Zusatz linear soll hier verdeutlicht werden, dass sich die Tafel innerhalb des linearen TV-Signals befindet. Bei der linearen Tafel kann es sich ebenfalls um eine graphische Darstellung zur Anzeige auf dem Bildschirm handeln. Möglich sind statische Tafeln, d.h. statische Bilder, oder auch dynamische Tafeln mit Bewegtbildern.

Der Hintergrund für das Einfügen der linearen Tafel vor und/oder nach der zu ersetzenden linearen Bildsequenz ist, dass die HbbTV-Applikation Kenntnis davon haben muss, wann die zu ersetzende lineare Bildsequenz vom Empfangsgerät empfangen wird und wiedergegeben würde. Genauso muss die HbbTV-Applikation auch Kenntnis darüber haben, wie lange die zu ersetzende lineare Bildsequenz dauert bzw. bis wann eine nicht zu ersetzende lineare Bildsequenz empfangen wird und wiedergegeben werden soll. Da sich bei dieser Information eine gewisse Unschärfe einschleichen kann, wird daher vorzugsweise die lineare Tafel vor und/oder nach der zu ersetzenden linearen Bildsequenz innerhalb des linearen TV-Signals senderseitig eingefügt. Die zeitliche Dauer dieser ersten linearen Tafel eröffnet einen zeitlichen Toleranzraum für das Ändern der Bezugsquelle.

Besonders vorteilhaft ist es daher, wenn die eingefügte erste lineare Tafel inhaltlich mit der ersten Online-Tafel übereinstimmt. Dadurch wird ein bildlicher Übergang vom linearen TV-Signal auf die erste Online-Tafel und letztendlich die Online-Bildsequenz ermöglicht, der für den Zuschauer nicht oder nur kaum wahrnehmbar ist.

Besonders bevorzugt wird beim Wechsel der Wiedergabe von der Online-Bildsequenz zurück zum TV-Signal durch die Applikation eine zweite Online-Tafel eingeblendet, um auch hier eine gewisse Unschärfe bei der Synchronisation auszugleichen. Auch kommt es bei einigen Empfangsgeräten abhängig vom gewählten Codec des TV-Signals zu Verzögerungen bei der Wiedergabe. Auch solche Verzögerungen lassen sich mit der Einblendung der Online-Tafel überbrücken.

Idealerweise erzeugt die HbbTV-Applikation diese zweite Online-Tafel nach der abgeschlossenen Wiedergabe der alternativen Online-Bildsequenz auf dem Bildschirm bis die Wiedergabe des linearen TV-Signals beginnt. Vorzugsweise endet die Anzeige der zweiten Online-Tafel synchron mit einer, senderseitig nach der zu ersetzenden linearen Bildsequenz in das lineare TV-Signal eingefügten zweiten linearen Tafel. Besonders bevorzugt ist es, wenn diese nach der zu ersetzenden linearen Bildsequenz eingefügte zweite lineare Tafel bildlich identisch ist zu der vorgenannten zweiten Online-Tafel. Dadurch lässt sich auch hier ein nahtloser Übergang in der Darstellung erzielen.

Wie bereits vorstehend angedeutet, benötigt die HbbTV-Applikation gewisse Informationen für die Verfahrensausführungen, insbesondere hinsichtlich der zu ersetzenden linearen Bildsequenzen und deren konkreten Übertragungszeitpunkten. Gemäß vorteilhafter Ausführung des Verfahrens können über wenigstens einen, vorzugsweise dedizierten Signalisierungskanal Signalisierungsinformationen bezüglich zu ersetzenden linearen Bildsequenzen an die HbbTV-Applikation übertragen werden. Solche Signalisierungsinformationen können bspw. den Start- und/oder Endzeitpunkt bzw. die Dauer der zu ersetzenden linearen Bildsequenz umfassen. Auch Informationen bezüglich des Start- und/oder Endzeitpunktes bzw. der Dauer wenigstens einer eingefügten linearen Tafel und/oder bezüglich deren Inhalt können signalisiert werden. Genauso ist die Signalisierung von Informationen zu alternativen Online-Bildsequenzen, insbesondere deren Bezugsadresse vorstellbar.

Bei gewissen Versionen des HbbTV-Standards können sogenannte StreamEvents innerhalb des linearen TV-Signals zur Übertragung von etwaigen Informationen an ein Empfangsgerät vorgesehen sein. Diese sind jedoch oftmals nicht für alle möglichen Verbreitungswege des TV-Signals verfügbar oder aber es kommt zur Blockade solcher Events durch bestimmte Funktionseinheit des Übertragungsweges. Auch aus diesem Grund wird gemäß einer vorteilhaften Ausgestaltung der Erfindung der alternative Signalisierungskanal in Form der dedizierten Internetverbindung der HbbTV-Applikation zu einem Signalisierungsserver des Sendezentrums gewählt. Geeignet ist der Aufbau einer Long-Polling-Verbindung zwischen HbbTV-Applikation und Signalisierungsserver. Signalisierungsinformationen können somit über die bestehende Verbindung als Push-Nachricht an die HbbTV-Applikation übertragen werden.

Der Signalisierungsserver kann ein Servercluster oder eine cloudbasierte Serverlösung sein. Wie vorstehend ausgeführt, wird zur Verfahrensausführung eine stehende Verbindung zu den jeweiligen Empfangsgeräten aufgebaut. Die Anzahl der Empfangsgeräte steigt und fällt mit dem Wochentag und der Tageszeit. Vor diesem Hintergrund wird vorzugsweise eine lastabhängige Skalierung der verfügbaren Serverressourcen vorgenommen, d.h. während Zeiten mit erhöhtem Zuschaueraufkommen werden die Serverressourcen durch Hinzunahme weiterer Servereinheiten erweitert, um den höheren Bedarf abzufangen. In Zeiten geringerem Zuschaueraufkommen werden zur Kosteneinsparung Serverressourcen dynamischen abgeschaltet.

Wie bereits mehrmals zuvor angedeutet wurde, spielt die Synchronisation der HbbTV-Applikation mit dem linearen TV-Signal eine wichtige Rolle. Die Kenntnis der HbbTV-Applikation hinsichtlich der Start-/Endzeitpunkte der zu ersetzenden linearen Bildsequenzen und/oder linearen Tafeln begrenzt sich jedoch oftmals auf die Zeitangabe des Sendezentrums, d.h. die Information zu welchem Zeitpunkt die entsprechenden linearen Bildsequenzen/Tafeln im Sendezentrum ausgestrahlt werden/wurden. Zur Bestimmung des Empfangszeitpunktes im Endgerät muss daher noch die zeitliche Verzögerung auf dem Übertragungsweg berücksichtigt werden.

Ältere Versionen des HbbTV-Standards sehen keine Funktion zur expliziten Abfrage des Sendezeitpunktes vor. Allerdings bietet der HbbTV-Standard eine Funktion zur Abfrage wenigstens eines Bildparameters des empfangen linearen TV-Signals an. Diese Funktion wird gemäß bevorzugter Ausführung nun dazu genutzt, wenigstens einen Bildparameter des empfangenen linearen TV-Signals durch die HbbTV-Applikation zu überwachen, um einen Zeitpunkt einer empfangsseitig festgestellten Parameteränderung zu bestimmen. Durch Vergleich dieses tatsächlichen Zeitpunktes mit einem vordefinierten Zeitpunkt der Parameteränderung auf Seiten der Sendestation kann anhand der zeitlichen Abweichung auf die Übertragungsverzögerung geschlossen werden.

Idealerweise wird für diesen Vorgang senderseitig eine gezielte Bildparameteränderung ausgelöst, deren definierter Zeitpunkt der HbbTV-Applikation zuvor mitgeteilt wird, vorzugsweise über den Signalisierungskanal. Diese startet zumindest kurz vor der erwarteten Bildparameteränderung die Überwachung des empfangenen linearen TV-Signals auf Bildparameteränderungen. Idealerweise handelt es sich bei dem wenigstens einen Bildparameter um das verwendete Seitenverhältnisses des TV-Bildes des linearen TV-Signals, bspw. eine Änderung von 4:3 zu 16:9 oder einem anderen Bildformat. Der HbbTV-Standard sieht eine entsprechende Funktion zur Abfrage des Seitenverhältnisses vor, diese für die Bestimmung der Übertragungsverzögerung genutzt werden kann.

Für die zuvor genannte Vorgehensweise kann es gegebenenfalls notwendig bzw. sinnvoll sein, die Uhrzeit des Sendezentrum mit der internen Uhrzeit des Empfangsgerätes zu synchronisieren, da Abweichungen ansonsten zu einer Falschberechnung der Übertragungsverzögerung führen können. Gemäß einer vorteilhaften Vorgehensweise kann eine mögliche Zeitdifferenz zwischen den internen Uhrzeiten durch den Austausch ein oder mehrere Zeitstempel ermittelt werden. Eine solche Zeitdifferenz kann dann bspw. im Empfangsgerät korrigiert oder aber bei der internen Berechnung der Verzögerungsdauer berücksichtigt werden. Insbesondere lässt sich mittels eines solchen Verfahrens auch die Übertragungsverzögerung beim Austausch der Signalisierungsinformationen zwischen Empfangsgerät und Server der Sendestation ermitteln.

Grundsätzlich könnte die Verzögerungsdauer bei der Übertragung des linearen TV-Signals für jedes einzelne Empfangsgerät einmalig oder periodisch bestimmt werden. Da die jeweilige Verzögerungsdauer jedoch maßgeblich von der gewählten Übertragungsart des TV-Signals zum Empfangsgerät abhängt, kann alternativ die Verzögerungsdauer stichprobenartig von einzelnen Empfangsgeräten für unterschiedliche Übertragungswege (bspw. Satellit, Kabel oder terrestrisch) bestimmt werden. Die erfassten Verzögerungen könnten dann als Referenzgrößen für Empfangsgeräte, die über einen ähnlichen/Identischen Übertragungsweg das Signal erhalten, bereitgestellt werden. Dazu können die ermittelten Messgrößen an das Sendezentrum oder eine sonstige Datenbank übertragen werden, um diese bei Bedarf an weitere Empfangsgeräte zu verteilen. Diese vorteilhafte Vorgehensweis verlangt jedoch nach einer Möglichkeit zur Bestimmung des Übertragungsweges. Den Übertragungsweg kann die HbbTV-Applikation bspw. anhand des DVB-Triplets für den empfangenen TV-Sender bestimmen.

Gemäß bevorzugter Ausführungsform der Erfindung kann die alternative Online-Bildsequenz von einem Werbemittelserver oder ein CDN-System an das Empfangsgerät übertragen werden. Der bereits eingangs erläuterte Werbemittelserver kann dementsprechend auf den jeweiligen Fernsehzuschauer abgestimmte Werbeinhalt auswählen und die individuelle Übertragung an die jeweiligen Empfangsgeräte anstossen.

Hierbei ist jedoch zu beachten, dass gegebenenfalls aus datenschutztechnischen Gründen die Identität des jeweiligen Fernsehzuschauers gewahrt werden muss. Demzufolge wird vorgeschlagen, eine Direktverbindung zwischen Werbemittelserver und dem Empfangsgerät zu vermeiden und stattdessen wenigstens einen Zwischenknoten (Proxyserver) vorzusehen, über den der notwendige Datenaustausch zwischen den vorgenannten Einheiten abgewickelt wird. Konventionelle Werbemittelserver setzen Cookies auf dem Kundengerät, um Informationen über den Kunden zu erhalten. Mittels des zwischengeschalteten Zwischenknotens wird nunmehr verhindert, dass entsprechende Cookies unmittelbar auf dem Empfangsgerät gesetzt werden. Bestenfalls werden die Cookies auf dem Zwischenknoten gespeichert und von diesem stellvertretend verwaltet. Bei Bedarf werden Cookies dem Werbemittelserver vom Zwischenknoten zugeleitet.

Durch das Verfahren können einzelne Werbespots ersetzt werden. Durch das optionale Einfügen von wenigstens einer bzw. zwei linearen Tafeln in das lineare TV-Signal pro zu ersetzender Bildsequenz muss eine Verkürzung der nutzbaren Sendezeit während einer Werbeunterbrechung in Kauf genommen werden. Vor diesem Hintergrund ist es sinnvoll, nicht nur einzelne Werbespots zu überlagern, sondern stattdessen ganze Werbeblöcke am Stück durch Online-Bildsequenzen entsprechender Länge auszutauschen. Wie bei Werbespots wird pro Werbeblock auch nur eine lineare Tafel vor und/oder hinter dem Block eingefügt.

Für die Übertragung der alternativen Online-Bildsequenzen an das Empfangsgerät wird vorzugsweise auf ein geeignetes Streaming-Protokoll gesetzt, insbesondere HTTP-Streaming. Als geeignet erweist sich das bekannte und standardisierte MPEG DASH Protokoll, bei diesem Bildinhalte in eine Vielzahl HTTP-basierter Datei-Segmente aufgeteilt werden. Ein Online-Werbeblock könnte dann durch eine Vielzahl an Datei-Segmenten bereitgestellt werden. Durch MPEG DASH können einzelne Werbespots nahtlos aneinander gehängt werden (Stitching). Alternativ kann die Streaming-Übertragung der Online-Bildsequenzen auch mittels HTTP Live Streaming, kurz HLS erfolgen. Auch hier kann ein Online-Werbeblock durch eine Vielzahl an Datei-Segmenten bereitgestellt werden, wodurch auch auf diesem Wege einzelne Werbespots nahtlos aneinander gehängt werden können (Stitching). Neben dem erfindungsgemäßen Verfahren betrifft die vorliegende Erfindung ebenfalls ein System bestehend aus wenigstens einem HbbTV-fähigen Empfangsgerät und einem Internetserver zur Bereitstellung alternativer Online-Bildsequenzen. Das System ist geeignet, das erfindungsgemäße Verfahren auszuführen, weshalb sich für das System dieselben Vorteile und Eigenschaften ergeben, wie sie bereits vorstehend anhand des erfindungsgemäßen Verfahrens ausführlich dargelegt wurden. Auf eine wiederholende Beschreibung wird aus diesem Grund verzichtet.

Neben dem System betrifft die Erfindung ebenfalls ein HbbTV-fähiges Empfangsgerät für die Ausführung des erfindungsgemäßen Verfahrens als auch eine auf einen Datenträger gespeicherte HbbTV-Applikation, die eine entsprechende Logik zur Ausführung des erfindungsgemäßen Verfahrens umfasst. Auch diesbezüglich gilt, dass sich sowohl das Empfangsgerät als auch die HbbTV-Applikation durch dieselben Vorteile und Eigenschaften auszeichnet, wie sie bereits vorstehend anhand des erfindungsgemäßen Verfahrens aufgezeigt wurden.

Weitere Vorteile und Eigenschaften der vorliegenden Erfindung sollen nachfolgend anhand eines in den Figuren dargestellten Ausführungsbeispiels näher erläutert werden. Es zeigen:

Fig. 1:    eine Darstellung des Systems zur Signalisierung und Übertragung von Online-Bildsequenzen,

Fig. 2:    eine Darstellung zur Verdeutlichung des Übergangs zwischen linearem TV-Signal und Online-Video,

Fig. 3:    ein Sequenzdiagramm während eines Spot-Overlays und

Fig. 4    eine Darstellung zur Verdeutlichung der Synchronisierung zwischen TV-Gerät und Sendezentrum.

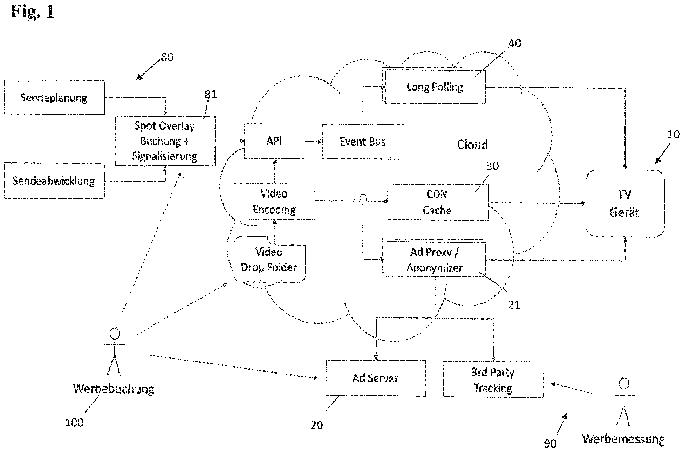

Eine Übersicht über das System zum Abruf von Online-Bildsequenzen (Online-Videos) liefert die Darstellung in Figur 1. Diese zeigt das nutzerseitige TV-Empfangsgerät 10, bspw. ein SmartTV mit installierter HbbTV-Applikation. Das TV-Gerät empfängt über einen nicht dargestellten Übertragungskanal ein lineares TV-Signal von einer entsprechenden Sendestation. Ebenso wird mit dem digitalen Sendesignal in der sog. AIT (Application Information Table) eine Internet-URL gesendet, die durch das Empfangsgerät 10 über eine Internetverbindung geladen wird, sobald der Zuschauer auf den entsprechenden Sender umschaltet. Die HTML-Seite hinter dieser URL wird über dem Fernsehbild eingeblendet und eine JavaScript-Applikation auf dieser Seite ausgeführt.

Auf dieser HTML-Seite lassen sich durch den JavaScript-Player Videos wie in einem Webbrowser abspielen. Dies eröffnet die Möglichkeit, die Anzeige des linearen Bildsignals des ausgewählten TV-Kanals durch eine bestimmte Online-Bildsequenz (nachfolgend als Spot-Overlay bzw. Online-Video-Werbung bezeichnet) zu ersetzen. Diese Methodik wird nun dazu verwendet, TV-Werbung innerhalb des linearen TV-Signals durch Online-Video-Werbung (Spot-Overlays) zu ersetzen.

Diese Online-Video-Werbung wird nun ähnlich wie im Bereich der Internet-Werbung an das Empfangsgerät 10 über eine bestehende Internetverbindung ausgeliefert. Werbung im Internet wird über sogenannte Ad-Server 20 ausgespielt, die die Anzahl der Ausspielungen (Impressions) und Interaktionen (Clicks) messen und danach automatisch die verschiedenen Werbekampagnen aussteuern. Damit die HbbTV-Applikation des Empfangsgerätes 10 die Online-Video-Werbung (Spot Overlays) anzeigen und aussteuern kann, muss sie sich mit dem Ad-Server 20 verbinden, der eine für den Zuschauer passende Werbekampagne auswählt. Der Werbetreibende 100 versieht die Online-Video-Werbung (Spot Overlay), wie bei Internet-Werbung üblich, mit sog. Tracking-Pixeln. Über diese Pixel kann der Werbetreibende 100 messen, wie viele Zuschauer das Spot Overlay gesehen haben und wie lange es angesehen wurde (View-Time-Tracking). Diese Tracking-Pixel enthalten oft Cookies um einzelne Zuschauer wiederzuerkennen. Diese Art von Tracking wird auch 3rd-Party-Tracking genannt, da es zum TV-Sender und Zuschauer eine weitere Partei 90 einführt.

Da die HbbTV-Applikation automatisch geladen und gestartet wird, sobald der Zuschauer auf einen Sender mit HbbTV-Signalisierung schaltet, wird dadurch aus dem bisher anonymen Fernsehzuschauer ein messbarer Internet-Nutzer. Um die Anonymität des Fernsehzuschauers zu wahren wird deswegen bei der Kommunikation mit dem Ad-Server 20 ein sog. Ad-Proxy oder Anonymizer 21 zwischengeschaltet, der dafür sorgt, dass der Fernsehzuschauer für den Ad-Server 20 oder den Werbetreibenden 100 weiterhin anonym bleibt und dass der Werbetreibende keine Cookies direkt auf dem TV-Gerät 10 setzen kann. Die Videodaten des Spot-Overlays werden dann letztendlich über das CDN-System 30 verbreitet bzw. zum Download bereitgehalten.

Organisiert wird das Spot-Overlay von der Sendeabwicklung 80 und insbesondere der Einrichtung 81, die entsprechende Buchung von Werbetriebenden entgegennimmt und die notwendigen Verfahrensschritte auf Seiten der Sendestation vornimmt. Hierzu zählt ebenso die Übertragung entsprechenden Informationen an das Empfangsgerät 10 per Signalisierungsnachricht, um sicherzustellen, dass das Spot Overlay synchron zu einem Werbespot des linearen TV-Signals angezeigt werden kann. Diese zusätzliche Signalisierungsnachricht wird parallel und synchron zum Fernsehbild auf das TV-Gerät 10 des Zuschauers übertragen.

Hierzu wird stattdessen ein auf Internet-Standards basierendes Verfahren namens Long Polling verwendet, das auch mit älteren Internet-Browserversionen kompatibel ist. Dazu wird von jedem HbbTV-fähigem TV-Gerät 10 eine stehende Verbindung zu einem Long-Polling-Server 40 aufgebaut, welcher die von der Einheit 81 bereitgestellten Signalisierungsinformationen an das TV-Gerät 10 weiterleitet. In diesem Signal sind Daten enthalten, die zur Darstellung und Messung des Spot-Overlays notwendig sind.

Das Aufrechterhalten der Long-Polling-Verbindungen zu den TV-Geräten 10 erzeugt zur Primetime ab 20:00 die höchste Last und muss von einem Server-Cluster getragen werden. In den frühen Morgenstunden ist die Last bspw. etwa 20-mal niedriger. Um die Kosten für die Server 40 gering zu halten werden bei erhöhter Last zusätzliche Server 40 hochgefahren und bei abnehmender Last wieder heruntergefahren (Autoscaling).

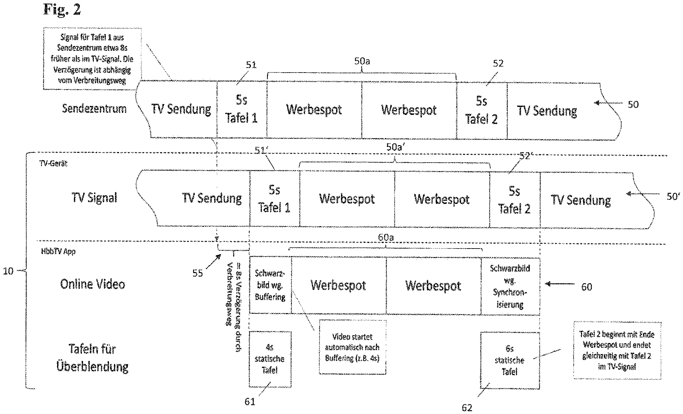

Über die Signalisierungsnachrichten erhält das Empfangsgerät 10 also die notwendige Kenntnis darüber, wie lange die zu ersetzende lineare Bildsequenz dauert bzw. bis wann eine nicht zu ersetzende lineare Bildsequenz empfangen wird und wiedergegeben werden soll. Da sich bei dieser Information eine gewisse Unschärfe einschleichen kann, wird von der Sendestation eine erste lineare Tafel 51 vor und eine zweite lineare Tafel 52 nach der zu ersetzenden linearen Bildsequenz 50a innerhalb des linearen TV-Signals 50 eingefügt. Siehe hierzu bspw. Figur 2. Die zeitliche Dauer dieser ersten und zweiten linearen Tafel 51, 52 beträgt in etwa jeweils fünf Sekunden und eröffnet einen zeitlichen Toleranzraum für das Ändern der Bezugsquelle auf Seiten des Empfangsgerätes 10. Mit dem Bezugszeichen 50' ist das am Empfangsgerät 10 empfangene lineare TV-Signal gekennzeichnet, das die zu ersetzende Bildsequenz 50a' umfasst, die durch die beiden Tafeln 51', 52' eingefasst ist.

Genauso erzeugt die HbbTV-Applikation für etwa fünf Sekunden eine statische Online-Tafel 61, die über das dargestellte TV-Bild gelegt wird, während das Online-Video 60 lädt (puffert) und das TV-Bild eigentlich schwarz sein würde. Die statische Tafel 62 am Ende des Online-Videos 60 überblendet die Schwarzphase während das TV-Gerät 10 zurück zum TV-Signal 50a schaltet.

Da die Verzögerung 55 des Sendesignals 50, 50' abhängig vom Verbreitungsweg (Satellit, Kabel oder Terrestrik) ist, muss die Verzögerung des Online-Videos 60 und der statischen Tafel 61, 62 abhängig vom Verbreitungsweg eingestellt werden. Der im Browser des Fernsehgerätes 10 eingebaute Video-Player spielt das Online-Video 60 aber automatisch ab, sobald "genug" gepuffert wurde. Gleichzeitig wird die erste statische Tafel 61 ausgeblendet. Wenn dies nach weniger als 5 Sekunden geschieht, muss die Anzeigedauer der letzten statischen Tafel 62 um eine Sekunde verlängert werden, damit am Ende des Spot-Overlays synchron zurück zum TV-Signal 50' umgeschaltet werden kann.

Da jeder ausgetauschte Werbespot 50a vorne und hinten mit einer 5-sekündigen Tafel 51, 52 versehen sein müsste und dies zu einem sehr großen Verlust an zur Verfügung stehender Werbezeit führen würde, werden idealerweise einzelne Werbespots nicht separat ausgetauscht, sondern stattdessen ganze Werbeblöcke auf einmal. Dies bedeutet, dass solche Werbeblöcke aus einzelnen Werbespots zusammengesetzt werden müssen, was auch als Stitching bezeichnet wird. Jeder einzelne Werbespot entspricht üblicherweise einer Werbekampagne, die individuell auf bestimmte Zuschauergruppen optimiert ist (Targeting). Das heißt dann aber auch, dass die Werbeblöcke individuell für jeden einzelnen Zuschauer zusammengestellt werden müssen.

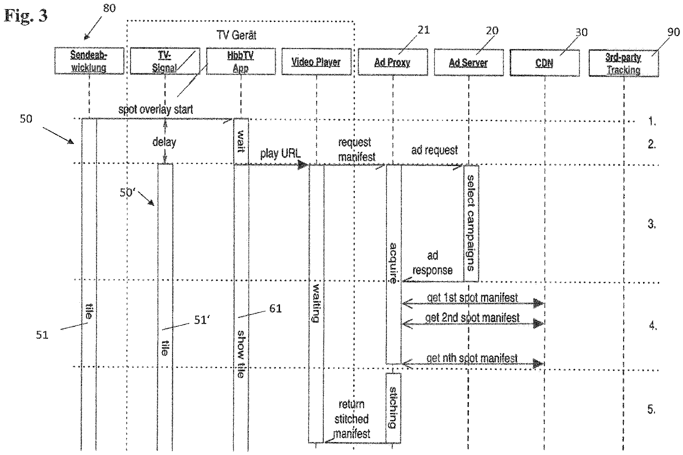

Ein zeitlicher Ablauf für ein Spot Overlay lässt sich anhand des Sequenzdiagramms der Figur 3 verdeutlichen. Zum Zeitpunkt 1 wird zunächst von der Sendeabwicklung 80 über die Long-polling-Verbindung der unmittelbare Beginn eines Spot Overlays an die HbbTV-Applikation auf dem TV-Gerät 10 signalisiert. Im Schritt 2 verzögert die HbbTV-Applikation zunächst das Umschalten der Wiedergabe vom linearen TV-Signal 50a auf das Online-Video 60, um die Übertragungsdauer 55 des linearen Signals 50 von der Sendestation zum Empfangsgerät 10 zu berücksichtigen.

Diese Verzögerung 55, deren Erfassung später noch im Detail erläutert wird, ist abhängig vom Verbreitungsweg des TV-Signals 50 zum TV-Gerät 10. Im Schritt 3 stellt der Videoplayer sodann eine Anfrage an den Ad-Server 20 nach einem Werbeblock, wobei diese Anfrage über den zwischengeschalteten Ad-Proxy 21 übertragen wird. Der Ad-Server 20 wählt in Abhängigkeit gewisser Informationen die passende Werbekampagne mit den passenden Werbespots aus und teilt die getroffene Auswahl mit der sogenannten Ad-Response dem Ad-Proxy 21 mit.

Für das Streaming der ausgewählten Werbespots zum Videoplayer des Empfangsgerätes 10 wird auf das bekannte MPEG DASH Protokoll gesetzt, alternatv liese sich dies auch mittels HLS realisieren. Der Streaming -Inhalt wird hierbei in einzelne Segmente aufgeteilt, wobei die Aufteilung und Quelle in Metadaten, hier als MPD oder Manifest bezeichnet, bereitgestellt werden. Nach Bereitstellung der Ad-Response werden im Schritt 4 also die jeweiligen manifest-Daten für die ausgewählten Werbespots zwischen CDN-Cache 30 (Content Delivery Network) und Ad-Proxy 21 ausgetauscht. Die Einzelfiles werden dann weiter durch den Ad-Proxy 21 zu einem einheitlichen Manifest-File für einen Werbeblock zusammengefügt (Stitching) und dem Videoplayer des Empfangsgerätes 10 zur Verfügung gestellt, so dass dieser das Straming des Online-Videos 60 zum Empfangsgerät 10 initiieren kann.

Vor dem Beginn der Darstellung wird das gestreamte Video im Schritt 6 vorgepuffert. Dem Diagramm der Fig. 3 ist hier ebenso zu entnehmen, dass die im linearen Sendesignal 50 enthaltene lineare Tafel 51 nach der Verzögerung 55 durch Wiedergabe der Online-Tafel 61 ersetzt wird, bis der Videoplayer dann mit der Ausgabe des ersten Werbespots des Werbeblockes beginnt.

Während der sequenziellen Wiedergabe (Schritt 7) des geladenen vollständigen Werbeblocks auf dem TV-Gerät 10 erfolgt parallel dazu das sog. Visibility-Tracking über den Ad-Proxy 21, wodurch der Werbekunde kontrollieren kann, wie oft und wie lange der einzelne Werbespot ausgespielt bzw. gesehen wurde. Gemessen wird üblicherweise, wenn der Werbespot zu 0%, 25%, 50%, 75% und 100% gesehen wurde.

Wie bereits vorstehend erläutert wurde, ist für die Funktion des Spot-Overlays eine Synchronisation zwischen Sendezentrum 80 und Empfangsgerät 10 zwingend notwendig. Die TV-Geräte 10 können das lineare Sendesignal über verschiedene Verbreitungswege empfangen, z.B. über Satellit, Kabel oder Terrestrik. Die Verzögerung 55 des Sendesignals ist über jeden Verbreitungsweg unterschiedlich. Im neueren HbbTV 2.0 Standard ist zwar ein Feature zur Synchronisierung des TV-Signals 50 mit der HbbTV-Applikation vorgesehen, allerdings fehlt dieses Feature jedoch in den älteren Standards.

Auch ist eine Synchronisierung über die Systemuhr des TV-Gerätes ist nicht möglich, da diese Uhren zu ungenau sind. Um trotzdem eine Synchronisierung sicherzustellen, muss die Verzögerung 55 über den jeweiligen Verbreitungsweg gemessen und in der HbbTV-Applikation gespeichert werden.

Über welchen Verbreitungsweg das TV-Signal übertragen wird, lässt sich in der HbbTV-Applikation aber über das sog. DVB Triplet ermitteln. Das sind die drei Zahlen ONID (Original Network ID für das verbreitende Netzwerk), TSID (Transport Stream ID, entspricht einem anlogen Transponder) und die SID (Service ID innerhalb eines Transport Streams). Wenn die Signalverzögerung 55 für jede dieser drei Zahlenkombinationen bekannt ist, kann das Spot-Overlay durch eine clientseitige Verzögerung 55 synchron mit dem Sendesignal 50 gehalten werden.

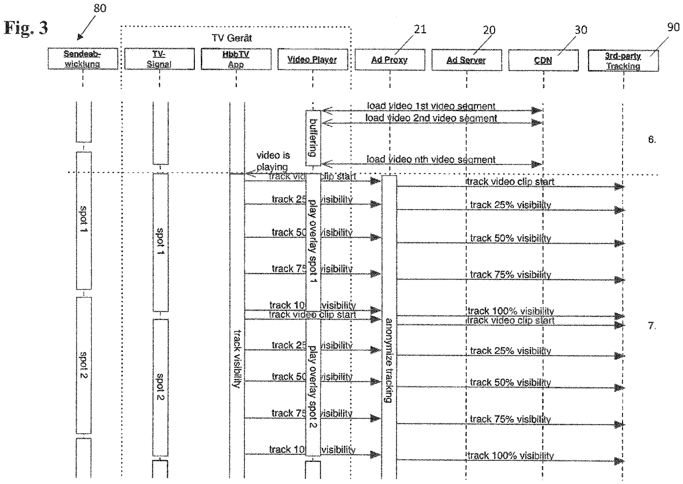

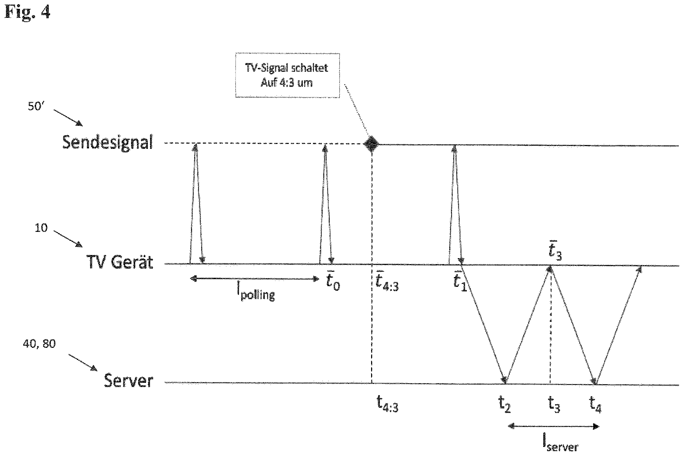

In der HbbTV-Applikation auf dem TV-Gerät lässt sich das aktuelle Seitenverhältnis des empfangenen TV-Signals 50' (Aspect Ratio von 4:3 oder 16:9) abfragen. Konkret wird dies im Zeitdiagramm der Fig. 4 periodisch mit dem Intervall $I_{polling}$ wiederholt. Wenn nun zu einem bekannten Zeitpunkt $t_{4:3}$ der Wechsel des Seitenverhältnisses im Sendezentrum erfolgt, so kann die Uhr auf dem TV-Gerät auf 100ms genau synchronisiert werden wenn man die Verzögerung $\Delta t$ des Sendesignals zwischen Server 40, 81 und Empfangsgerät 10 kennt. Vorliegend erhält das Empfangsgerät zum Zeitpunkt $\bar{t}_0$ das das empfangene Signal im Bildformat 16:9 übertragen wird, während zum Zeitpunkt $\bar{t}_1$ erstmals festgestellt wird, dass das Bildformat nun im Format 4:3 ausgestrahlt wird.

Da man nicht davon ausgehen kann, dass die Uhr auf dem TV-Gerät synchron mit der Uhr im Sendezentrum ist und da durch die Übertragung der Signale zurück auf die Server 40, 81 des Sendezentrums Laufzeiten einzuberechnen sind, werden die Zeitstempel $\bar{t}_1$, $\bar{t}_3$ zwischen TV-Gerät 10 und Server 40, 81 zweimal übertragen. Auf diese Art und Weise kann die Laufzeit des Signals $I_{server} = t_4 - t_2$ herausgerechnet werden (siehe Figur 4).

Damit ergeben sich für den Zeitpunkt des Wechsels des Seitenverhältnisses $t_{4:3}$

$$t_3 \approx \frac{t_2 + t_4}{2} \qquad\qquad \Delta t = t_3 - \bar{t}_3$$

$$\bar{t}_{4:3} \approx \frac{t_0 + t_1}{2} \qquad\qquad t_{4:3} = \bar{t}_{4:3} + \Delta t$$

Lässt man diese Messung über alle Verbreitungswege auf mehreren performanten TV-Geräten 10 laufen und wählt hier die genausten Messungen aus ($I_{server}$ minimal), so kann man die Signalverzögerung abhängig von Verbreitungsweg (DVB Triplet) auf etwa 100ms messen.

Die Genauigkeit der Messung hängt hiermit von dem festen Polling-Intervall $I_{polling}$ und der Übertragung der Zeitmessung vom TV-Gerät zum Server $I_{server}$ ab. Um die Messungen möglichst genau zu machen, sollte das Polling-Intervall $I_{polling}$ möglichst klein gewählt werden und nur die Messungen verwendet werden, bei denen $I_{server}$ möglichst klein ausgefallen ist.

## Patentansprüche

1. Verfahren zur Überblendung wenigstens einer linearen Bildsequenz eines linearen TV-Signals mit wenigstens einer Online-Bildsequenz, wobei ein Empfangsgerät das lineare TV-Signal empfängt und auf einem Bildschirm ausgibt, eine auf dem Empfangsgerät ausgeführte HbbTV-Applikation, die Online-Bildsequenzen von einem Internetserver empfängt und wenigstens eine lineare Bildsequenz des TV-Signals überblendet, indem anstatt der linearen Bildsequenz die Online-Bildsequenz am Bildschirm ausgegeben wird, **dadurch gekennzeichnet, dass** die HbbTV-Applikation während des notwendigen Pufferprozesses vor dem Abspielen der Online-Bildsequenz eine Online-Tafel während der Pufferzeit am Bildschirm erzeugt.

2. Verfahren nach einem der vorhergehenden Ansprüche, **dadurch gekennzeichnet, dass** innerhalb des linearen TV-Signals vor und/oder nach der zu ersetzenden linearen Bildsequenz eine erste lineare Tafel eingefügt wird, wobei die durch die HbbTV-Applikation erzeugte Online-Tafel idealerweise inhaltlich der innerhalb des linearen TV-Signals enthaltenen ersten linearen Tafel entspricht.

3. Verfahren nach einem der vorhergehenden Ansprüche, **dadurch gekennzeichnet, dass** die HbbTV-Applikation nach der abgeschlossenen Wiedergabe der Online-Bildsequenz eine zweite Online-Tafel am Bildschirm erzeugt, bis die Wiedergabe des linearen TV-Signals beginnt, vorzugsweise endet die Anzeige der Online-Tafel synchron mit einer, nach der zu ersetzenden linearen Bildsequenz eingefügten zweiten linearen Tafel.

4. Verfahren nach einem der vorhergehenden Ansprüche, **dadurch gekennzeichnet, dass** die HbbTV-Applikation über einen Signalisierungskanal Signalisierungsinformationen bezüglich einer zu ersetzenden linearer Bildsequenz empfängt, wobei die Signalisierungsinformationen vorzugsweise einen Start- und/oder Endzeitpunkt bzw. eine Dauer der zu ersetzenden linearen Bildsequenz, Start- und/oder Endzeitpunkt bzw. Dauer wenigstens einer eingefügten linearen Tafel und/oder Inhalt der linearen Tafel und/oder Informationen zu Online-Bildsequenzen, insbesondere deren Quelladresse, umfassen, und wobei als Signalisierungskanal vorzugsweise eine Long-Polling-Verbindung der HbbTV-Applikation zu einem Signalisierungsserver genutzt wird, der die Signalisierungsinformationen als Push-Nachricht an die HbbTV-Applikation übermittelt.

5. Verfahren nach Anspruch 4, **dadurch gekennzeichnet, dass** der Signalisierungsserver ein Servercluster bzw. cloudbasiert ist und lastabhängig eine Skalierung der verfügbaren Serverressourcen erfolgt, insbesondere wird während Zeiten mit erhöhtem Zuschaueraufkommen die verfügbare Serverkapazität durch dynamische Aktivierung ein oder mehrerer Servereinheiten vergrößert.

6. Verfahren nach einem der vorhergehenden Ansprüche, **dadurch gekennzeichnet, dass** für eine Synchronisation zwischen empfangenen linearen TV-Signal und HbbTV-Applikation die Übertragungsverzögerung zwischen Sendezentrum und Empfangsgerät ermittelt wird, vorzugsweise indem ein Bildparameter des empfangenen linearen TV-Signals laufend durch die HbbTV-Applikation geprüft und der tatsächliche Zeitpunkt der empfangsseitigen Parameteränderung mit dem vordefinierten und empfangsseitig bekannten Zeitpunkt der sendezentrumseitigen Parameteränderung verglichen wird, wobei es sich bei dem Bildparameter bevorzugt um das Seitenverhältnisses des linearen TV-Bildes handelt.

7. Verfahren nach Anspruch 6, **dadurch gekennzeichnet, dass** die HbbTV-Applikation vorab einen möglichen Zeitunterschied zwischen der internen Uhr des Empfangsgerätes und des Sendezentrums ermittelt und diesen gegebenenfalls in die Berechnung der Übertragungsverzögerung einbezieht.

8. Verfahren nach Anspruch 6 oder 7, **dadurch gekennzeichnet, dass** die festgestellte Übertragungsverzögerung zusammen mit der Art des Übertragungsweges des TV-Signals als Referenzverzögerung gespeichert wird, wobei der Übertragungsweg idealerweise anhand des DVB-Triplets bestimmt wird.

9. Verfahren nach einem der vorhergehenden Ansprüche, **dadurch gekennzeichnet, dass** die Online-Bildsequenz von einem Werbemittelserver ausgewählt und durch das Empfangsgerät von diesem oder einem CDN-System abgerufen wird.

10. Verfahren nach Anspruch 9, **dadurch gekennzeichnet, dass** die Kommunikation zwischen Werbemittelserver und Empfangsgerät über wenigstes einen Zwischenknoten erfolgt, um die Anonymität des Empfangsgerätes gegenüber dem Werbemittelserver zu wahren, wobei der Zwischenknoten insbesondere eine Speicherung von Cookies auf dem Empfangsgerät verhindert und diese idealerweise zur Nutzerverwaltung stellvertretend verwaltet und gegebenenfalls dem Werbemittelserver zur Verfügung stellt.

11. Verfahren nach einem der vorhergehenden Ansprüche, **dadurch gekennzeichnet, dass** es sich bei der wenigstens einen zu ersetzenden linearen Bildsequenz um wenigstens einen Werbespot oder Werbeblock handelt.

12. Verfahren nach einem der vorhergehenden Ansprüche, **dadurch gekennzeichnet, dass** der Abruf der Online-Bildsequenz per HTTP Streaming erfolgt, insbesondere mittels Dynamic Adaptive Streaming over HTTP (MPEG-DASH) oder HTTP Live Streaming (HLS), wobei die HTTP-basierten Datei-Segmente des MPEG-DASH- bzw. HLS-Standards einzelnen Werbespots eines Werbeblocks entsprechen.

13. System bestehend aus wenigstens einem HbbTV-fähigen Empfangsgerät und mindestens einem Internetserver zur Bereitstellung von Online-Bildsequenzen, wobei das System zur Ausführung des Verfahrens gemäß einem der vorhergehenden Ansprüche geeignet ist.

14. HbbTV fähiges Empfangsgerät geeignet für die Ausführung des Verfahrens gemäß einem der Ansprüche 1 bis 12.

15. Auf einem Datenträger gespeicherte HbbTV-Applikation mit einer Ausführungslogik zur Ausführung des Verfahrens gemäß einem der Ansprüche 1 bis 12.

**Fig. 1**

## Fig. 2

| | | | | | | | |
|---|---|---|---|---|---|---|---|
Signal für Tafel 1 aus Sendezentrum etwa 8s früher als im TV-Signal. Die Verzögerung ist abhängig vom Verbreitungsweg

**Sendezentrum** — TV Sendung | 5s Tafel 1 | Werbespot | Werbespot | 5s Tafel 2 | TV Sendung — 50

51      50a      52

**TV-Gerät**

**TV Signal** — TV Sendung | 5s Tafel 1 | Werbespot | Werbespot | 5s Tafel 2 | TV Sendung — 50'

51'      50a'      52'

**HbbTV App**

10

**Online Video** — Schwarzbild wg. Buffering | Werbespot | Werbespot | Schwarzbild wg. Synchronisierung — 60

55      60a

≈ 8s Verzögerung durch Verbreitungsweg

**Tafeln für Überblendung** — 4s statische Tafel | Video startet automatisch nach Buffering (z.B. 4s) | 6s statische Tafel

Tafel 2 beginnt mit Ende Werbespot und endet gleichzeitig mit Tafel 2 im TV-Signal

61      62

**Fig. 3**

Fig. 3

**Fig. 4**